# EUROPÄISCHE PATENTSCHRIFT

(11) **EP 2 025 552 B1**
(45) Veröffentlichungstag und Bekanntmachung des Hinweises auf die Patenterteilung: **13.04.2016**
(21) Anmeldenummer: 08012522.2
(22) Anmeldetag: 10.07.2008
(51) Int. Cl.: B60N 2/32, B60P 3/42

(54) **Sitzanordnung für ein Fahrzeug, Fahrzeuginneneinrichtung und Fahrzeug mit einer Sitzanordnung**
Seating assembly for an automobile, automobile interior device and automobile with a seating assembly
Installation de siège pour un véhicule, dispositif intérieur de véhicule et véhicule doté d'une installation de siège

(30) Priorität: 10.07.2007 DE 102007032438
(43) Veröffentlichungstag der Anmeldung: 18.02.2009
(73) Patentinhaber: AGUTI PRODUKTENTWICKLUNG & DESIGN GMBH, 88085 Langenargen (DE)
(72) Erfinder: Grieger, Michael, 88079 Kressbronn (DE)
(74) Vertreter: Otten, Roth, Dobler & Partner mbB Patentanwälte

(56) Entgegenhaltungen:
- EP-A- 1 211 131
- EP-A- 1 226 998
- EP-A- 2 028 038

## Beschreibung

Die Erfindung betrifft eine Sitzanordnung gemäß Anspruch 1, eine Fahrzeuginneneinrichtung gemäß Anspruch 11 und ein Fahrzeug gemäß Anspruch 12.

### Stand der Technik

Bei Fahrzeugsitzen sind unterschiedlichste Ausgestaltungen je nach Hauptanwendung des Sitzes bekannt. Die Ausgestaltung des Sitzes ist dabei vom jeweiligen Verwendungszweck bzw. von möglicherweise bereitgestellten Zusatzfunktionen des Sitzes abhängig. So sind insbesondere Sitze in solchen Fahrzeugen entsprechend ausgebildet, die beispielsweise als Wohn- bzw. Campingmobile genutzt werden können.

Die EP 1 211 131 A1 betrifft eine Sitzbank für Fahrzeuge, die in Fahrzeuglängsrichtung eingebaut ist, wobei ein Teil einer Sitzfläche zusammen mit einer zugehörigen Sitzlehne quer zur Fahrtrichtung bewegbar gelagert ist.

### Aufgabe und Vorteile der Erfindung

Aufgabe der Erfindung ist es, eine Sitzanordnung für ein Fahrzeug bzw. eine Fahrzeuginnenrichtung bzw. ein Fahrzeug bereitzustellen, wodurch eine Fahrzeug-Sitzanordnung unterschiedlichen Anforderungen vorteilhaft erfüllbar sind.

Diese Aufgabe wird durch die Ansprüche 1, 11 und 12 gelöst.

In den abhängigen Ansprüchen sind vorteilhafte Weiterbildungen der Erfindung aufgezeigt.

Die Erfindung geht zunächst aus von einer Sitzanordnung für ein Fahrzeug, insbesondere von einer Fahrzeug-Sitzbank, mit einem Sitzflächenelement, das an einem Sitzflächenunterbau positioniert ist. Ein wesentlicher Aspekt der Erfindung liegt darin, dass Umbaumittel vorgesehen sind, mit denen unter Wegbewegen des Sitzflächenelements die Sitzanordnung in einen Fahrzeugsitz umbaubar ist, wobei mit diesem Fahrzeugsitz mit einem zum Sitzflächenelement unterschiedlichen zweiten Sitzelement eine quer zur Sitzposition der Sitzanordnung veränderte Sitzposition für eine Person im Fahrzeugsitz bereitgestellt ist.

Die Umbaumittel sind ausgebildet, um durch Hochklappen des Sitzflächenelements der Sitzanordnung zumindest das Rückenlehnenelements des Fahrzeugsitzes zu bilden. Ein Hochklappen des Sitzflächenelements der Sitzanordnung ermöglicht es, einfach und schnell, die Sitzanordnung so umzubauen, dass das Rückenlehnenelement des Fahrzeugsitzes problemlos aus der bestehenden Sitzanordnung bereitgestellt werden kann. Das Hochklappen des Sitzflächenelements kann beim Umbauen insbesondere geführt bewegt werden. Vorteilhafterweise kann eine stabile Fixierung des Rückenlehnenelements in der aufgerichteten Stellung eingerichtet werden. Besonders bevorzugt ist das Hochklappen des Sitzflächenelements der Sitzanordnung derart möglich, dass das hochgeklappte Sitzflächenelement in der hochgeklappten Stellung lösbar arretierbar bzw. fest fixierbar in seiner Stellung ist. Insbesondere kann die Fixierung sich selbsttätig einrichten, z. B. durch einen Rast- bzw. Einklickmechanismus z. B. wenn die gewünschte Hochklappstellung erreicht ist. Grundsätzlich kann das hochklappbare Sitzflächenelement in einer von mehreren geringfügig unterschiedlichen Hochklappstellungen arretiert werden. Bevorzugt ist das hochgeklappte und arretierte Sitzflächenelement so ausgestaltet, dass auch ein Umbauen des hochgeklappten Sitzflächenelements wieder zurück in die niedergeklappte Position insbesondere zum Rückbau der Sitzanordnung bzw. der Sitzbank jederzeit möglich ist. Dies geschieht insbesondere nach einem Lösen der Arretierung bzw. nach einem Entrastungs- oder Ausklickvorgang am hochgeklappten Sitzflächenelement.

Auf einer Seite des Sitzflächenelements, die rückwärtig zur Sitzfläche des Sitzflächenelements liegt, ist eine Rückenlehnenkontur für den Fahrzeugsitz ausgebildet. Damit wird eine komfortable Sitzposition für die im Fahrzeugsitz sitzende Person bereitgestellt. Dies kann ein bequemes und komfortables Sitzen im erstellten Fahrzeugsitz ermöglichen. Der Rückenbereich der im Fahrzeugsitz sitzenden Person kann durch die Rückenlehnenkontur bequem und positionssicher aufgenommen werden. Beispielsweise kann die Rückenlehnenkontur entsprechend einem Sport-Fahrzeugssitz ausgeformt sein. Insbesondere lässt sich dadurch ein ergonomisch vorteilhafter Fahrzeugsitz bereitstellen.

Damit lässt sich eine Sitzanordnung für ein Fahrzeug, beispielsweise eine Fahrzeug-Sitzbank in einem Wohnmobil oder einem Campingfahrzeug, an unterschiedliche Situationen bzw. Nutzzwecke anpassen. Insbesondere kann mit der Anordnung neben einer Komfort-Sitzmöglichkeit für eine oder mehrere Personen, die mit der Sitzanordnung bestimmungsgemäß eingerichtet ist, eine weitere alternative Sitzmöglichkeit mit einer veränderten bestimmungsgemäßen Sitzposition zur Verfügung gestellt werden. Insbesondere kann nach dem Umbau ein Fahrzeugsitz installiert sein, der allen ästhetischen, technischen und gesetzlichen Vorgaben für den Einsatz als Fahrzeugsitz insbesondere bei einer Nutzung als Passagiersitz während der Fahrt des Fahrzeuges entspricht.

Insbesondere lässt sich die Sitzanordnung problemlos bzw. mit wenigen Handgriffen bzw. insbesondere ohne Hilfsmittel bzw. Werkzeuge in einen Fahrzeugsitz umwandeln. Durch das Wegbewegen des Sitzflächenelements der Sitzanordnung wird zudem eine besonders platzsparende Nutzung der umbaubaren Anordnung gewährleistet. Zum Beispiel kann der Platzbedarf des Fahrzeugsitzes dem Platzbedarf der Sitzanordnung in etwa entsprechen oder sogar geringer sein. Vorteilhafterweise ist für den Umbau der Sitzanordnung lediglich das Sitzflächenelement weg genommen bzw. verstellt werden, wodurch mit dem zweiten Sitzflächenelement ein quer zur Sitzposition der Sitzanordnung ausgerichtete weitere vollwertige Sitzposition einrichtbar ist. Mit den Umbaumitteln kann die gesamte Sitzfläche bzw. das gesamte Sitzflächenelement der Sitzanordnung wegbewegt werden oder nur ein Teil des Sitzflächenelements der Sitzanordnuhg, um den Fahrzeugsitz zu errichten. Vorteilhafterweise muss die erfindungsgemäße Sitzanordnung nicht zwingend ein Rückenlehnenelement aufweisen, wird aber in der Regel ein solches besitzen, das jedoch für die Umbaubarkeit nicht hinderlich ist. Mit dem Rückenlehnenelement der Sitzanordnung kann ggf. ein Zusatznutzen verbunden sein zum Beispiel wenn dieses als Funktionselement des Fahrzeugsitzes dient, z.B. als Polster- oder Stützelement des Fahrzeugsitzes, was ggf. eine komfortable Nutzung des Fahrzeugsitzes ohne dafür zusätzliche Elemente ermöglicht.

Mit den Umbaumitteln ist es besonders einfach möglich mit Hilfe und insbesondere aus den Komponenten der Sitzanordnung einen Fahrzeugsitz zu generieren, der während der Fahrt als Personsitz zugelassen ist bzw. vergleichsweise hohen Sicherheitsstandards entspricht.

Vorteilhafterweise sind die Umbaumittel ausgebildet, mit dem Sitzflächenelement der Sitzanordnung ein Rückenlehnenelement des Fahrzeugsitzes zu bilden. Damit kann der Fahrzeugsitz besonders platzsparend bzw. ohne zusätzliche Komponente für ein Rückenelement erstellt werden. Außerdem ist es dadurch vorteilhaft möglich, dass zur Unterbringung des wegbewegten Sitzflächenelements der Sitzanordnung kein Stauraum oder anderweitige Einrichtung benötigt wird, wenn der Fahrzeugsitz eingerichtet ist. Zur Bildung des Rückenlehnenelements des Fahrzeugsitzes kann das gesamte Sitzflächenelement der Sitzanordnung verwendet werden oder nur ein Teil des. Sitzflächenelements. Das Sitzflächenelement der Sitzanordnung kann beispielsweise aus einem Polsterteil gebildet sein, das bei der Sitzanordnung als Sitzfläche dient. An diesem Polsterteil kann eine Anlagefläche für eine Rückenpartie einer im Fahrzeugsitz sitzenden Person bzw. das Rückenlehnenelement integral ausgeformt sein oder die Rückenlehnenseite ist daran z.B. als separat angebrachtes Element ausgebildet. Eine insbesondere ergonomisch auf die Kontur eines menschlichen Rückens abgestimmte Form des Rückenlehnenelements kann auf einer der Sitzfläche der Sitzanordnung abgewandten bzw. gegenüberliegenden Seite des Sitzflächenelements der Sitzanordnung besonders vorteilhaft ausgebildet sein.

Vorteilhafterweise kann das Sitzflächenelement so gestaltet sein, dass dieses von einer Person mit einem Handgriff bzw. in einem Umbauschritt in die Position zur Bereitstellung des Rückenlehnenelements gebracht werden kann. Dies kann insbesondere unkompliziert bzw. ohne größere Kraftanstrengung geschehen, wozu ggf. entsprechende Hilfen zum Beispiel Griffe am Sitzflächenelement, Führungen zu dessen Bewegung oder ggf. auch mechanische bzw. motorische Hilfsmittel vorgesehen sein können. Beispielsweise kann der Umbauvorgang elektromotorisch unterstützt vonstatten gehen.

In einer vorteilhaften Ausführungsform des Erfindungsgegenstandes ist mit der Sitzanordnung eine im Fahrzeug quer zur Fahrtrichtung ausgerichtete Sitzposition für eine Person einrichtbar, insbesondere eine Sitzanordnung mit mehreren Sitzplätzen. So kann beispielsweise eine im Camping- bzw. Wohnmobilbereich häufig vorteilhaft eingesetzte Sitzmöglichkeit bzw. eine Sitzbank bereitgestellt werden, mit der eine Sitzposition quer zu einer Fahrtrichtung des entsprechenden Fahrzeuges ausgerichtet ist. Beispielsweise ist es häufig gewünsche, dass ein Rückenlehnenbereich einer Fahrzeug-Sitzbank längs an oder vor einer Fahrzeuglängsseitenwand angeordnet ist. So kann beispielsweise eine so genannte Dinette in einen Fahrzeug eingerichtet sein, mit zwei Sitzbänken beidseitig eines zwischen den Sitzbänken positionierten Tisches, wobei eine Sitzbank für die Fahrzeugfahrt in einen Fahrzeugsitz mit einer Sitzposition in Fahrtrichtung umgebaut werden kann. Dies ist insbesondere dann von Vorteil, wenn der Gesetzgeber die Nutzung eines Fahrzeug-Sitzes während der Fahrt nur dann zulässt, wenn mit dem Fahrzeugsitz eine Sicherheits-Sitzposition in oder gegen Fahrtrichtung bereitstellbar ist. Damit kann eine Sitzbank bzw. Sitzanordnung mit einer Sitzposition quer zur Fahrtrichtung, die daher ggf. nicht für eine Nutzung als Personensitz während der Fahrt zugelassen ist, auch für die Bereitstellung eines Fahrzeugssitzes bzw. zumindest eines Notsitzes während der Fahrt genutzt werden.

Es ist überdies bevorzugt, dass der Sitzflächenunterbau so ausgestaltet ist, eine Sitzfläche des Fahrzeugssitzes abzustützen. Der vorhandene Sitzflächenunterbau kann damit ohne bzw. gegebenenfalls mit wenigen Umbauschritten auch als Aufnahme- bzw. Abstützung für die neu zu bildende Sitzfläche bzw. auch das Rückenlehnenelement des Fahrzeugsitzes genutzt werden. Dies ist insbesondere praktikabel und platzsparend.

Es ist außerdem vorteilhaft, dass der Sitzflächenunterbau verstellbar ausgebildet ist, um eine an die Sitzfläche des Fahrzeugsitzes angepasste Abstützung zu ermöglichen. Es kann aus praktischen Gründen hilfreich sein, wenn bei der Fahrzeugsitzbank ein Sitzflächenunterbau mit einer entsprechend vergleichsweise großen Grundfläche verkleinerbar ist und für die Sitzanordnung insbesondere genau anpassbar ist.

Es ist außerdem besonders vorteilhaft, dass an der Sitzanordnung Elemente einer Personenrückhaltevorrichtung derart vorhanden sind, dass mit diesen nach dem Umbau der Sitzanordnung an dem Fahrzeugsitz eine Rückhaltevorrichtung für eine im Fahrzeug sitzende Person bereitstellbar ist. Damit werden Vorkehrungen bei der Sitzanordnung getroffen, mit denen bei dem daraus gebildeten Fahrzeugsitz sicherheitstechnisch relevante Elemente vorhanden sind. Dadurch kann der Fahrzeugsitz unmittelbar nach dem Umbau aus der Sitzanordnung sofort als vollwertiger Personensitz für einen Sicherheitssitz während einer Fahrzeugfahrt genutzt werden. Die Elemente der Personenrückhaltevorrichtung sind insbesondere unverlierbar und an der gewünschten Position dauerhaft vorhanden, was einen schnelle Fertigstellung bzw. spontane Nutzung des Fahrzeugsitzes ermöglicht. Insbesondere lässt sich damit in einem Fahrzeug mit einer erfindungsgemäßen Sitzanordnung die Zahl der Sitzplätze, welche als Sitzplatz zur Personen-Nutzung während der Fahrt zugelassen sind, entsprechend erhöhen. Insbesondere deshalb, weil die Sitzanordnung in der Regel nicht für die Nutzung während der Fahrt zugelassen sind, aufgrund beispielsweise der Sitzposition quer zur Fahrtrichtung bzw. weil Vorschriften hinsichtlich der Personensicherung von in der Sitzanordnung sitzender Personen nicht erfüllt werden können.

Eine vorteilhafte Ausgestaltung des Erfindungsgegenstandes zeichnet sich dadurch aus, dass am Rückenlehnenelement und/oder am Sitzflächenunterbau des Fahrzeugsitzes eine Sicherheitsgurt-Vorrichtung für eine im Fahrzeugsitz sitzende Person vorhanden ist. Dadurch lässt sich ohne weitere Maßnahmen das Sitzflächenelement des Sitzanordnung direkt in das Rückenlehnenelement mit einem Gurtrückhaltesystem umbauen, womit praxisrelevante Fahrzeugstandards ohne Einschränkungen erfüllt werden. Damit steht der umgebaute Fahrzeugsitz in keinem Punkt einem herkömmlichen Fahrzeug-Sicherheitssitz nach. Auch beliebige weitere Einrichtungen eines modernen Fahrzeugsitzes lassen sich bei dem aus der erfindungsgemäßen Sitzanordnung umgebauten Fahrzeugsitz bereitstellen, z.B. Verstellmöglichkeiten der Rücken- bzw. Sitzfläche oder Komfortmerkmale wie z.B. eine Sitzflächenheizung.

Weiter wird vorgeschlagen, dass ein Sitzflächenteil des Fahrzeugsitzes vorhanden ist, das bei aufgebauter Sitzanordnung innerhalb des Sitzflächenunterbaus unterbringbar ist. Damit kann auf engstem Raum bzw. in einem durch den Sitzflächenunterbau bereitgestellten Hohlraum das Sitzflächenteil des Fahrzeugsitzes untergebracht sein. Das Sitzflächenteil ist somit insbesondere gegen Verschmutzungen bzw. Beschädigungen geschützt und für den Umbau immer am Ort seiner Nutzung greifbar.

Weiter wird vorgeschlagen, dass die Umbaumittel derart gestaltet sind, dass mit dem Hochklappen des Sitzflächenelements der Sitzanordnung gekoppelt, das Sitzflächenteil des Fahrzeugsitzes in seine richtige Position bringbar ist. So kann beispielsweise an einer Schwenkachsenanordnung sowohl das Sitzflächenelement der Sitzanordnung als auch das Sitzflächenteil des Fahrzeugssitzes beim Wegbewegen des Sitzflächenelements der Sitzanordnung so verstellt werden, dass der Fahrzeugsitz in einem Vorgang erstellbar ist. Insbesondere wird mit dem Hochklappen des Sitzflächenelements gleichzeitig auch das Sitzflächenteil des Fahrzeugsitzes in die richtige Relativstellung gebracht, so dass nach dem Hochklappen des Sitzflächenelements der Fahrzeugsitz komplett aufgestellt und zur Nutzung bereit ist.

Es ist außerdem vorteilhaft, dass Umbaumittel derart vorgegeben sind, dass ein Rückenlehnenelement dies. Fahrzeugsitzes, welches das Sitzflächenteil der Sitzanordnung durch Umklappen bildet, veränderbar bzw. verkürzbar ist. Nach dem verkürzen des Rückenlehnenelement des Fahrzeugsitzes benötigt dieses im nach unten weggeklappten Zustand einen vergleichsweise geringeren Bauraum in Richtung der Verkürzung des Rückenlehnenelements. Damit kann eine relativ schmalere Sitzbanksitzfläche bzw. Sitzbank erstellt werden, als bei einem nicht verkürzbaren Rückenlehnenelement des Fahrzeugsitzes.

Hierzu ist es beispielsweise möglich, in einem unteren Bereich des Rückenlehnenelements ein Teil zu entfernen, welches insbesondere ein abnehmbares Teil des Polsters der Rückenlehnenkontur des Fahrzeugsitzes und einen Teil der Sitzfläche der-Sitzbank umfasst, wegzunehmen und anschließend über einen Verkürzungs- bzw. Verschiebemechanismus, beispielsweise eine Teleskopanordnung die Rückenlehne zusammenzuschieben. Die so verkürzte Rückenlehne bildet nach dem Wegklappen nach unten und Versenken in einem den Unterbau der Sitzbank bildenden Kasten eine in der Breite der gebildeten Sitzfläche schmalere Sitzfläche der Sitzbank. Für die Erstellung einer gewünschten bequemen Sitzpolsterung der Sitzbank kann noch ein Polsterelement auf das umgeklappt Rückenlehnenelement gelegt werden. Die Verkürzung des Rückenlehnenelements kann beispielsweise um ca. ein Drittel oder mehr der gesamten Länge des Rückenlehnenelements ausmachen.

Beim erneuten Hochklappen wird nach dem Hochklappen des Rückenlehnenelements dieses über die Teleskopanordnung wieder auf die maximale bzw. ursprüngliche Länge ausgezogen und das entnommene Teil wieder eingesetzt, so dass wieder ein vollständig zusammengebautes Rückenlehnenelement erstellbar ist.

Außerdem ist es denkbar, dass das Rückenlehnenelement insbesondere in etwa auf der halben Länge umklappbar auszugestalten bzw. mit einer Trennung und einem Klappmechanismus zu versehen, so dass der obere Teil der Rückenlehne nach hinten oder nach vorne wegklappbar ist. Auch damit kann die Höhe des Rückenlehnenelements verringerte beispielsweise halbiert werden. Anschließend kann das so verkürzte Rückenlehnenelement um einen Drehpunkt nach unten geklappt werden, wobei der Drehpunkt etwas unterhalb der Oberkante des Kastens der Sitzbank liegt und damit die Polsterkontür im Kasten vollständig versenkt wird. Auch hier kann für die Erstellung einer gewünschten ebenen Sitzpolsterung der Sitzbank noch ein passendes Polsterelement auf das im Sitzkasten versenkte Rückenlehnenelement gelegt werden. Nach dem Hochklappen des zusammengeklappten Rückenlehnenelements wird das obere Teil wieder in die richtige Position aufgeklappt, so dass das Rückenlehnenelement vollständig wieder zusammengebaut ist.

Die Erfindung betrifft außerdem eine Fahrzeuginneneinrichtung, bei welcher eine der oben genannten Sitzanordnungen vorgesehen ist. Damit kann eine Fahrzeuginneneinrichtung entsprechend den oben genannten Vorteilen ausgestaltet werden.

Des Weiteren bezieht sich die Erfindung auf ein Fahrzeug mit einer der oben genannten Sitzanordnungen. So kann insbesondere ein Transporter, ein Kleinbus, ein Wohn- bzw. Campingmobil mit zwei Sitzbankanordnungen für eine Dinette mit einem Fahrzeugtisch beispielsweise so umgebaut werden, dass zumindest ein Fahrzeugsitz in bzw. gegen Fahrtrichtung aus der jeweiligen Sitzanordnug bzw. der Fahrzeugsitzbank umbaubar ist.

### Figurenbeschreibung

In der Zeichnung sind anhand der schematisch dargestellten Figuren mehrere Ausführungsbeispiele unter Angabe weiterer Merkmale und Vorteile der Erfindung dargestellt.

Im Einzelnen zeigt:
- Figur 1: eine perspektivische Ansicht schräg von vorne auf eine erfindungsgemäße Fahrzeug-Sitzbank,
- Figur 2: die in Figur 1 gezeigte Fahrzeug-Sitzbank ohne Rückenpolster mit hochgeklapptem Sitzflächenelement und
- Figur 3: ein aus der Fahrzeug-Sitzbank gemäß Figur 1 gebildeter Fahrzeugsitz mit einem Sitzflächenelement.
- Figur 4a bis 4c: eine stark schematisierte Teilansicht von der Seite einer Fahrzeug-Sitzbank mit einem nach hinten wegklappbaren Teil eines Rückenlehnenelements in einem vollständig erstellten Zustand des Rückenlehnenelements, in einer nach hinten weggeklappten Position eines oberen Teils des Rückenlehnenelements und in einer nach unten geklappten Position des verkürzten Rückenlehnenelements mit aufgelegtem Sitzpolster und
- Figur 5a bis 5c: eine stark schematisierte Teilansicht von der Seite einer Fahrzeug-Sitzbank in einer weiteren erfindungsgemäßen Ausführungsform in einer vollständig hochgeklappten Position des Rückenlehnenelements und in 2 Arbeitsschritten zum Verkürzen des Rückenlehnenelements.

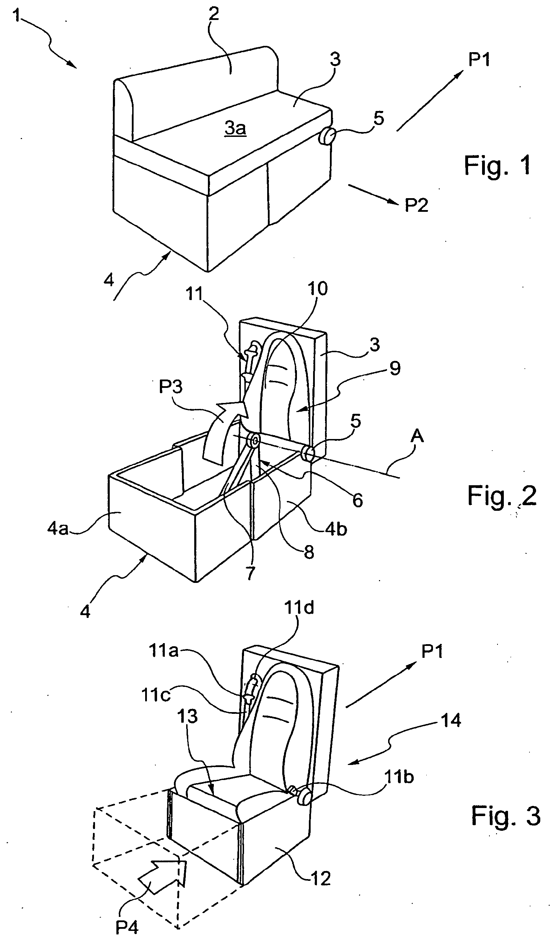

Figur 1 zeigt eine Längssitzbank 1, die beispielsweise in einem Camping- bzw. Wohnmobil längs einer Fahrtrichtung gemäß Pfeil P1 in einem Fahrzeug vorhanden sein kann. Dies Längssitzbank 1 ist stark schematisiert dargestellt und umfasst beispielsweise ein Rückenlehnenpolster 2, das abgewinkelt zu einem Sitzflächenpolster 3 daran abnehmbar angeordnet ist. Das Sitzflächenpolster 3 ist oberhalb eines Sitzbankuwterbaus 4 mit waagrechter Sitzfläche angeordnet. Eine auf der Längssitzbank 1 sitzende Person kann eine Sitzposition mit Ausrichtung bzw. Blickrichtung gemäß Pfeil P2 einnehmen. Die Ausrichtung der Sitzposition gemäß P2 ist insbesondere quer zur Fahrtrichtung P1 insbesondere um ca. 90° zu dieser versetzt.
Figur 2 zeigt eine Umbauposition, die sich beim Umbau aus der Längssitzbank 1 gemäß Figur 1 in einen daraus erstellbaren Fahrzeugsitz gemäß Figur 3 ergibt..Dazu ist das Rückenlehnenpolster 2 von der Längssitzbank 1 bzw. vom Sitzflächenpolster 3 entfernt worden. Anschließend, um die Anordnung gemäß Figur 2 zu erreichen, wurde das Sitzflächenpolster 3 gemäß Pfeil P3 nach oben hochgeklappt. Hierfür ist das Sitzflächenpolster 3 bzw. ein mit dem Sitzflächenpolster 3 verbundenes Bauteil um eine Verschwenkachse A verschwenkbar am Sitzbankunterbau 4 aufgenommen. Die Schwenkanordnung um die Schwenkachse A ist nur stark schematisiert angedeutet, beispielsweise mit einem Handrad 5 zum manuellen Hochklappen des Sitzflächenpolsters 3. Die Schwenkachse A ist an einem Stützgestell 6 mit einem Grundrahmen 8 unterhalb der Schwenkachse A mit z.B. Hohlstreben ausgebildet, wobei das Stützgestell 6 innerhalb eines vom Sitzbankunterbau 4 umschlossenen Bereichs vorhanden ist. Das Stützgestell 6 weist beispielsweise einen schräg vom Bereich der Schwenkachse A nach vorne verlaufenden Stützschenkel 7 auf, wodurch eine besonders stabile Ausgestaltung des Fahrzeugsitzes 14 gemäß Figur 3 gewährleistet ist.

Auf der rückwärtigen Seite des Sitzflächenpolsters 3 bzw. gegenüberliegend einer durch das Sitzflächenpolster 3 gebildeten Sitzfläche 3a ist ein Rückenlehnenelement 9 mit einer gepolsterten Aufnahmekontur 10 ausgebildet. Die Aufnahmekontur 10 ist insbesondere ergonomisch für eine in dem zu bildenden Fahrzeugsitz 14 sitzenden Person ausgestaltet.

Neben der Aufnahmekontur 10 sind Elemente einer Sicherheitsgurt-Anordnung 11 vorhanden. Die Sicherheitsgurt-Anordnung 11 kann beispielsweise als 3-Punkt-Sicherheitsgurt oder alternativ (nicht dargestellt) als 2-Punkt-Sicherheitsgurt bzw. Beckengurt ausgestaltet sein.

Der Sitzbankunterbau 4 ist hier beispielsweise aus zwei zueinander verschieblichen Unterbauelementen 4a und 4b gebildet. Für eine komfortable Sitzposition in dem zu bildenden Fahrzeugsitz 14 wird das Unterbauelement 4a relativ zum äußeren Unterbauelement 4b in dieses gemäß Pfeil P4 aus Figur 3 eingeschoben. Damit wird eine kompakte bzw. insbesondere geschlossene Sitzkiste 12 generiert, an welcher ein Sitzflächenelement des zu bildenden Fahrzeugsitzes 14 anbringbar ist. Das Sitzflächenelement 13 kann insbesondere auf die oberen Randabschnitte der ineinander geschobenen Unterbauelemente 4a, 4b fixiert bzw. daran aufgesetzt werden, wodurch der Fahrzeugsitz 14 gemäß Figur 3 fertig gestellt in sich stabilisiert wird. Das Sitzflächenelement 13 weist ebenfalls eine z.B. ergonomisch ausgestaltete Sitzpolsterkontur auf.

Am Fahrzeugsitz 14 ist außerdem ein weiteres Element der Sicherheitsgurt-Anordnung 11 in Form eines Gurtschlosses 11b vorhanden, in welches eine Gurtzunge 11a lösbar einklickbar ist. Die Gurtzunge 11a ist an einem um eine Umlenkung 11d geführten Sicherheitsgurt 11c aufgenommen, der über eine Retraktor-Einheit (nicht ersichtlich in Figur 2 und 3) selbsttätig aufrollbar bzw. von Hand abrollbar ist.

Für eine in dem Fahrzeugsitz 14 sitzende Person kann damit ein Sicherheitssitz bereitgestellt werden, wobei eine Sitzposition entgegen der Fahrtrichtung gemäß Pfeil P1 bereitgestellt ist. Grundsätzlich kann die Längssitzbank 1 auch in einen Fahrzeugsitz umgebaut werden, womit eine Sitzposition in Fahrtrichtung gemäß Pfeil P1 möglich ist. Dazu kann z.B. die Anordnung aus Figur 1 um 180 Grad gedreht ausgestaltet sein.

Der Fahrzeugsitz 14 bietet für eine darin sitzende Person eine angenehmen und sichere Sitzmöglichkeit, wobei durch den eingeschobenen Unterbau bzw. das Unterbauelement 4a auch eine entsprechende Beinfreiheit erreicht ist. Prinzipiell kann das Sitzflächenpolster 3 auch durch Verschieben oder Versetzen von der Längssitzbank 1 wegbewegt werden, um eine aufrechte Position für den Fahrzeugsitz 14 zu erhaltene. Es ist auch denkbar, dass mit dem Hochklappen des Sitzflächenpolsters 3 das Sitzflächenelement 13 gekoppelt mit hochgeklappt wird, um die in Figur 3 erreichte Gesamtposition des Fahrzeugsitzes 14 zu erreichen.

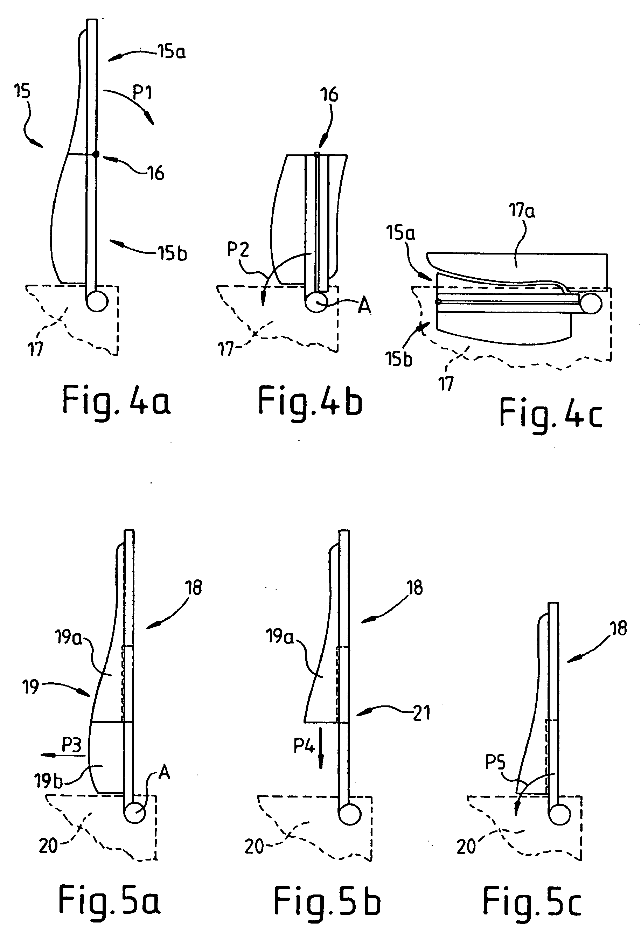

Für eine Verkürzung der Sitzbreite einer Fahrzeug-Sitzbank in der Sitzbankposition, ist es gemäß der Figuren 4a bis 4c möglich, ein Rückenteil 15 eines Fahrzeugsitzes beispielsweise durch eine Gelenkanordnung 16 nach hinten wegzuklappen, wie dies durch Pfeil P1 in Figur 4a angedeutet ist, um das Rückenteil 15 aus einer gegen Wegklappen um die Gelenkanordnung 16 gesicherten Position gemäß Figur 4a in die zusammengeklappte Position gemäß 4b bringen zu können. Über die Gelenkanordnung 16 wird eine Trennebene zwischen einem Rückenteil-Oberteil 15a und einem Rückenteil-Unterteil 15b geschaffen. Bei vollständig nach hinten zurückgeklapptem Rückenteil-Oberteil 15a ist das Rückenteil-Oberteil 15a anliegend am Rückenteil-Unterteil 15b. Anschließend kann das so verkürzte Rückenteil 15 gemäß Pfeil P2 um eine Achse A, die unterhalb einer Oberkante einer Sitzkiste 17 (nur teilweise angedeutet dargestellt) liegt, nach unten geklappt werden, um so das Rückenteil 15 in der Sitzkiste 17 unterzubringen. Mit einem passend ausgebildeten Sitzpolster 17a, das oben auf das Rückenteil-Oberteil 15a gelegt wird, kann gemäß Figur 4c eine ebene und gepolsterte Sitzfläche einer gebildeten Sitzbank erstellt werden.

Die Figuren 5a bis 5c veranschaulichen eine zur Anordnung gemäß der Figuren 4a, 4b alternative Möglichkeit ein Rückenteil 18 zu verkürzen. Hierfür ist das um die Drehachse A nach unten verschwenkbare Rückenteil 18 unterteilt und eine Polsterung 19 auseinandernehmbar, so dass ein unteres Polsterteil 19a im zusammengebauten Zustand des Rückenteils 18 wie durch Pfeil P3 in Figur 5a angedeutet vom Rückenteil 18 bzw. einem oberen Polsterteil 19b abnehmbar ist. Anschließend kann durch den gewonnenen Freiraum der obere Teil des Rückenteils 18 mit dem oberen Polsterteil 19a über beispielsweise einen Schiebe- bzw. einen Teleskopmechanismus 21 gemäß Pfeil P4 in Figur 5b nach unten verschoben werden. Hierdurch ergibt sich die Stellung gemäß 5c, wonach anschließend gemäß Pfeil P5 das verkürzte zusammengeschobene Rückenteil 18 nach unten in Richtung der teilweise angedeuteten Sitzkiste 20 abklappbar ist.

### Bezugszeichenliste:

- 1: Längssitzbank
- 2: Rückenlehnenpolster
- 3: Sitzflächenpolster
- 3a: Sitzfläche
- 4: Sitzbankunterbau
- 4a: Unterbauelement
- 4b: Unterbauelement
- 5: Handrad
- 6: Stützgestell
- 7: Stützschenkel
- 8: Grundrahmen
- 9: Rückenlehnenelement
- 10: Aufnahmekontur
- 11: Sicherheitsgurt-Anordnung
- 11a: Gurtzunge
- 11b: Gurtschloss
- 11c: Gurt
- 11d: Umlenkung
- 12: Sitzkiste
- 13: Sitzflächenelement
- 14: Fahrzeugsitz
- 15: Rückenteil
- 15a: Rückenteil-Oberteil
- 15b: Rückenteil-Unterteil
- 16: Gelenkanordnung
- 17: Sitzkiste
- 17a: Sitzpolster
- 18: Rückenteil
- 19: Polsterung
- 19a: Polsterteil
- 19b: Polsterteil
- 20: Sitzkiste
- 21: Teleskopmechanismus

## Patentansprüche

1. Sitzanordnung für ein Fahrzeug, insbesondere Fahrzeug-Sitzbank (1), mit einem Sitzflächenelement (3), das an einem Sitzflächenunterbau (4) positioniert ist, wobei Umbaumittel vorgesehen sind, mit denen unter Wegbewegen des Sitzflächenelements (3) die Sitzanordnung (1) in einen Fahrzeugsitz (14) umbaubar ist, **dadurch gekennzeichnet, dass** mit diesem Fahrzeugsitz (14) mit einem zum Sitzflächenelement (3) unterschiedlichen zweiten Sitzflächenelement (13) eine quer zur Sitzposition der Sitzanordnung (1) veränderte Sitzposition für eine Person im Fahrzeugsitz (14) bereitgestellt ist, wobei die Umbaumittel ausgebildet sind, um durch Hochklappen des Sitzflächenelements (3) der Sitzanordnung (1) zumindest das Rückenlehnenelement (9) des Fahrzeugsitzes (14) zu bilden und wobei auf einer Seite des Sitzflächenelements (3), die rückwärtig zur Sitzfläche (3a) des Sitzflächenelements (3) liegt, eine Rückenlehnenkontur (10) für den Fahrzeugsitz (14) ausgebildet ist.

2. Sitzanordnung nach Anspruch 1, **dadurch gekennzeichnet, dass** die Umbaumittel ausgebildet sind, mit dem Sitzflächenelement (3) der Sitzanordnung (1) ein Rückenlehnenelement (9) des Fahrzeugsitzes (14) zu bilden.

3. Sitzanordnung nach Anspruch 1 oder 2, **dadurch gekennzeichnet, dass** mit der Sitzanordnung (1) eine im Fahrzeug quer zur Fahrtrichtung ausgerichtete Sitzposition für eine Person einrichtbar ist.

4. Sitzanordnung nach einem der vorhergehenden Ansprüche, **dadurch gekennzeichnet, dass** der Sitzflächenunterbau (4) ausgestaltet ist, eine Sitzfläche (13) des Fahrzeugsitzes (14) abzustützen.

5. Sitzanordnung nach einem der vorhergehenden Ansprüche, **dadurch gekennzeichnet, dass** der Sitzflächenunterbau (4) verstellbar ausgebildet ist, um eine an die Sitzfläche (13) des Fahrzeugsitzes (14) angepasste Abstützung zu ermöglichen.

6. Sitzanordnung nach einem der vorhergehenden Ansprüche, **dadurch gekennzeichnet, dass** an der Sitzanordnung (1) Elemente einer Rückhaltevorrichtung (11) derart vorhanden sind, dass mit diesen nach dem Umbau der Sitzanordnung (1) an dem Fahrzeugsitz (14) eine Rückhaltevorrichtung (11) für eine im Fahrzeugsitz (14) sitzende Person bereitstellbar ist.

7. Sitzanordnung nach einem der vorhergehenden Ansprüche, **dadurch gekennzeichnet, dass** am Rückenlehnenelement (9) und/oder am Sitzflächenunterbau (12) des Fahrzeugsitzes eine Sicherheitsgurt-Vorrichtung (11) für eine im Fahrzeugsitz (14) sitzende Person vorhanden ist.

8. Sitzanordnung nach einem der vorhergehenden Ansprüche, **dadurch gekennzeichnet, dass** ein Sitzflächenteil (13) des Fahrzeugsitzes (14) vorhanden ist, das bei aufgebauter Sitzanordnung (1) innerhalb des Sitzflächenunterbaus (4) unterbringbar ist.

9. Sitzanordnung nach einem der vorhergehenden Ansprüche, **dadurch gekennzeichnet, dass** das Sitzflächenteil (13) des Fahrzeugsitzes (14) an der eingerichteten Sitzanordnung (1) in einem Bereich unterhalb des Sitzflächenelements (3) unterbringbar ist.

10. Sitzanordnung nach einem der vorhergehenden Ansprüche, **dadurch gekennzeichnet, dass** die Umbaumittel derart gestaltet sind, dass mit dem Hochklappen des Sitzflächenelements (3) der Sitzanordnung (1) gekoppelt das Sitzflächenteil (13) des Fahrzeugsitzes (14) in seine richtige Position bringbar ist.

11. Fahrzeuginneneinrichtung, insbesondere für ein Wohn- bzw. Campingmobil, mit einer Sitzanordnung (1) nach einem der vorhergehenden Ansprüche.

12. Fahrzeug mit einer Sitzanordnung (1) nach einem der vorhergehenden Ansprüche 1 bis 10.

## Claims

1. Seating assembly for a vehicle, in particular a vehicle bench (1), with a seating surface element (3) which is positioned on a seating surface substructure (4), wherein converting means are provided, by means of which by moving away the seating surface element (3) the seating assembly (1) can be converted into a vehicle seat (14), **characterised in that** with said vehicle seat (14) with a second seating surface element (13) different from the seating surface element (3) an adjusted seating position transverse to the seating position of the seating assembly (1) is provided for a person in the vehicle seat (14), wherein the converting means are designed to form at least the backrest element (9) of the vehicle seat (14) by folding up the seating surface element (3) of the seating assembly (1) and wherein on one side of the seating surface element (3), which is rearward to the seating surface (3a) of the seating surface element (3), a backrest contour (10) is formed for the vehicle seat (14).

2. Seating assembly according to claim 1, **characterised in that** the converting means are designed to form with the seating surface element (3) of the seating assembly (1) a backrest element (9) of the vehicle seat (14).

3. Seating assembly according to claim 1 or 2, **characterised in that** by means of the seating assembly (1) a seating position for a person can be set up which is aligned in the vehicle transversely to the direction of travel.

4. Seating assembly according to any one of the preceding claims, **characterised in that** the seating surface substructure (4) is designed to support a seating surface (13) of the vehicle seat (14).

5. Seating assembly according to any one of the preceding claims, **characterised in that** the seating surface substructure (4) is designed to be adjustable in order to provide a support adapted to the seating surface (13) of the vehicle seat (14).

6. Seating assembly according to any one of the preceding claims, **characterised in that** on the seating assembly (1) elements of a retaining device (11) are provided such that with the latter after converting the seating assembly (1) on the vehicle seat (14) a retaining device (11) can be provided for a person sitting in the vehicle seat (14).

7. Seating assembly according to any one of the preceding claims, **characterised in that** on the backrest element (9) and/or on the seating surface substructure (12) of the vehicle seat a safety belt device (11) is provided for a person sitting in the vehicle seat (14).

8. Seating assembly according to any one of the preceding claims, **characterised in that** a seating surface part (13) of the vehicle seat (14) is provided which can be accommodated inside the seating surface substructure (4) of an assembled seating assembly (1).

9. Seating assembly according to any one of the preceding claims, **characterised in that** the seating surface part (13) of the vehicle seat (14) on the established seating assembly (1) can be accommodated in an area underneath the seating surface element (3).

10. Seating assembly according to any one of the preceding claims, **characterised in that** the converting means are configured such that in connection with folding up the seating surface element (3) of the seating assembly (1) the seating surface part (13) of the vehicle seat (14) can be moved into its correct position.

11. Vehicle interior device, in particular for a caravan or camper van, comprising a seating assembly (1) according to any one of the preceding claims.

12. Vehicle with a seating assembly (1) according to any one of the preceding claims 1 to 10.

## Revendications

1. Agencement d'assise pour véhicule, en particulier banquette de véhicule (1), comprenant un élément de surface d'assise (3) qui est positionné sur une base de surface d'assise (4), des moyens de transformation permettant de transformer l'agencement d'assise (1) en un siège de véhicule (14) par écartement de l'élément de surface d'assise (3), **caractérisé en ce qu**'avec ce siège de véhicule (14), une position assise, modifiée transversalement par rapport à la position assise de l'agencement d'assise (1) dans le siège de véhicule (14), est mise à disposition pour une personne avec un deuxième élément de surface d'assise (13) différent de l'élément de surface d'assise (3), les moyens de transformation étant conçus pour former au moins l'élément de dossier (9) du siège de véhicule (14) en relevant vers le haut l'élément de surface d'assise (3) de l'agencement d'assise (1), et un contour de dossier (10) pour le siège de véhicule (14) étant formé sur une face de l'élément de surface d'assise (3), laquelle face se situe à l'arrière par rapport à la surface d'assise (3a) de l'élément de surface d'assise (3).

2. Agencement d'assise selon la revendication 1, **caractérisé en ce que** les moyens de transformation sont conçus pour former, avec l'élément de surface d'assise (3) de l'agencement d'assise (1), un élément de dossier (9) du siège de véhicule (14).

3. Agencement d'assise selon la revendication 1 ou 2, **caractérisé en ce qu'**avec l'agencement d'assise (1), une position assise pour une personne peut être mise en place, laquelle position étant orientée dans le véhicule transversalement au sens de marche.

4. Agencement d'assise selon l'une des revendications précédentes, **caractérisé en ce que** la base de surface d'assise (4) est conçue pour soutenir une surface d'assise (13) du siège de véhicule (14).

5. Agencement d'assise selon l'une des revendications précédentes, **caractérisé en ce que** la base de surface d'assise (4) est conçue réglable pour permettre un soutien adapté à la surface d'assise (13) du siège de véhicule (14).

6. Agencement d'assise selon l'une des revendications précédentes, **caractérisé en ce que** des éléments d'un dispositif de retenue (11) sont présents sur l'agencement d'assise (1), de telle sorte que ces derniers, après la transformation de l'agencement d'assise (1), permettent de fournir sur le siège de véhicule (14) un dispositif de retenue (11) pour une personne assise dans le siège de véhicule (14).

7. Agencement d'assise selon l'une des revendications précédentes, **caractérisé en ce qu**'un dispositif de ceinture de sécurité (11) pour une personne assise dans le siège de véhicule (14) est présent sur l'élément de dossier (9) et/ou sur la base de surface d'assise (12) du siège de véhicule.

8. Agencement d'assise selon l'une des revendications précédentes, **caractérisé** en **ce qu**'une partie de surface d'assise (13) du siège de véhicule (14) est présente, qui peut être logée à l'intérieur de la base de surface d'assise (4) lorsque l'agencement d'assise (1) est monté.

9. Agencement d'assise selon l'une des revendications précédentes, **caractérisé en ce que** la partie de surface d'assise (13) du siège de véhicule (14) peut être logée sur l'agencement d'assise (1) mis en place dans une zone située au-dessous de l'élément de surface d'assise (3).

10. Agencement d'assise selon l'une des revendications précédentes, **caractérisé en ce que** les moyens de transformation sont conçus de telle sorte que la partie de surface d'assise (13) du siège de véhicule (14) peut être amenée dans sa position exacte en étant couplée au relèvement vers le haut de l'élément de surface d'assise (3) de l'agencement d'assise (1).

11. Dispositif d'habitacle de véhicule, en particulier pour un camping-car ou une caravane, comprenant un agencement d'assise (1) selon l'une des revendications précédentes.

12. Véhicule comprenant un agencement d'assise (1) selon l'une des revendications précédentes 1 à 10.
